# EUROPEAN PATENT APPLICATION

(11) **EP 1 718 075 A1**
(43) Date of publication of application: **02.11.2006**
(21) Application number: 06113031.6
(22) Date of filing: 25.04.2006
(51) Int. Cl.: H04N 7/10, H04L 12/28

(54) **Method for the management of commands within a communications network, corresponding control device, computer program product and storage means**

(30) Priority: 25.04.2005 FR 0504250
(71) Applicant: CANON EUROPA N.V., NL-1185 XB Amstelveen (NL)
(72) Inventor: Raguet, Emmanuel, 35650 Le Rheu (FR); Bizet, Stéphane, 35340 Liffre (FR); Frouin, Laurent, 35700 Rennes (FR)
(74) Representative: Guéné, Patrick Lucien Juan Joseph

(57) **Abstract**

A method for the management of commands coming from a remote-control device in a communications network comprising a plurality of devices comprises the following steps implemented in a control device connected to a display device: the reception of a first predetermined command signal for the execution of a function to be applied to the multimedia content displayed on the display device and coming from a source device for which a connection with the display device is set up; the determining of the source device in the communications network; the verification of the function-executing capacity of the source device; in the event of positive verification, the sending of the command for execution of the function to the source device; in the event of negative verification, the determining of at least one device of the network capable of executing the function; and the selection of a device of the network to execute the function.

## Description

### 1. Field of the Invention

The field of the invention is that of the management of commands in communications networks for the interconnection of a plurality of devices.

More specifically, the invention relates to a method of command management to be applied to an audio-video stream within a communications network.

The invention can be applied especially but not exclusively within a home audiovisual network whose core is a backbone network comprising a plurality of nodes enabling the interconnection of a plurality of analog and/or digital type audio and/or video terminals (also called devices) so that they exchange audiovisual signals. The backbone network is, for example, of a high-bit-rate switched type, enabling especially the real-time exchange of moving pictures for distribution in a dwelling, each node being placed in a distinct room of a dwelling. The terminals belong for example to the following list of devices (which is not exhaustive): television receivers (using satellite, RF channels, cable, xDSL and other means), television sets, videocassette recorders, scanners, digital video cameras, digital cameras, DVD players, computers, personal digital assistants (PDAs), printers, etc.

In this particular application, the context is one in which the user is before a display device, for example a television set, on which there is displayed an audio-video stream coming from a source that belongs to the network and may be at a remote location from the display device.

### 2. Prior art

Conventionally, in a communications network, each node of the network co-operates with a television set (or more generally a display set) that is connected to it and associated with it. Together, they offer a user interface by which the user, generally by means of a remote-control unit, sending infrared commands intended for the node, selects for example a source device or a recording device (for example a videotape recorder) when the command coming from the remote-control unit requests a recording function.

When the user wishes to apply a function (for example recording or storage), selectable by his remote-control unit, to the audio-video stream which he is viewing, he must first of all select the apparatus on the device capable of making storage in the communications network before launching the recording command proper.

Thus, should the network have several devices capable of storage, the selection of an apparatus in the network may become a painstaking task for the user especially when he wishes to rapidly record a video stream or wishes to launch a function command to be quickly applied to the video stream that he is in the process of viewing.

It is furthermore desirable to use only one remote command sending device such as a remote-control unit to control the display device as well as control the sending of specific commands such as for example the recording.

The command functions of a universal type of remote-control unit are either dedicated to the display device or dedicated to an apparatus situated locally beside the display device. Thus, pressure on a key of the command which may be executed by the two apparatuses, must be preceded by pressure on a key enabling the selection of the apparatus for which it is desired to execute the command function. This therefore complicates the handling for the user and defers the execution of the command sent. Furthermore, this type of universal remote-control unit has the major drawback of not being applicable once the device to be controlled is not in the same room as the node before which the user is placed. Now this is the most frequent situation.

A known solution is proposed in the CEA 931A standard, defined in the document "Draft CEA-931-A, Remote Control Command Pass-through Standard for Home Networking". It can be applied when a control device (such as a digital television set) and a control device (such as a DVD player) are in two different rooms, while requiring only one remote-control device. The principle is the following: the universal remote-control function is accomplished by the translation into standard commands, in the control device, of infrared codes coming from the remote-control device. Then these standard commands are transmitted, through the network, to the control device so that it executes them.

One drawback of this prior art approach is that the user must indicate which is the device (control device or one of the controlled devices) to which he wishes to send a control signal. For this purpose, the remote-control device comprises either a set of distinct keys for each device capable of receiving commands, or one or more selection keys of the command destination device.

### 3. Goals of the invention

The above-mentioned drawbacks are not resolved by this approach. It is a goal of the invention especially to overcome these different drawbacks of the prior art.

More specifically, one of the goals of the present invention is to provide a method for the management of the commands of an audio-video stream within a communications network that optimizes the handling of the command in the communications network.

It is also a goal of the invention to reduce the user's handling time when he wishes to rapidly send a command for the execution of a function on an audio-video content that he is viewing or listening to.

### 4. Essential characteristics of the invention

The different goals as well as others there shall appear here below are achieved according to the invention by means of a method for the management of commands coming from a remote-control device in a communications network comprising a plurality of devices. The method is such that it comprises the following steps, implemented in a control device connected to a display device:
- reception of a first predetermined command signal for the execution of a function to be applied to the multimedia content displayed on the display device and coming from a source device for which a connection with the display device is set up;
- determining of the source device in the communications network;
- verification of the capacity to execute the function of the source device; in the event of positive verification:
- sending of the command for execution of the function to the source device; in the event of negative verification:
- determining of at least one device of the network capable of executing the function; and
- selection of a device of the network to execute the function.

Thus, the sending of a specific command to the control device placed before the user is used to implement an optimized process of search in the network in starting by verifying whether the source device itself is capable of executing the function associated with the signal. This therefore enables a faster orientation toward the appropriate device.

This method according to the invention is particularly suited when the functions to be executed are of a storage function type with a view to deferred re-reading.

Advantageously, the first predetermined command signal is activated by the pressing of at least one specific key of the remote-control device.

This facilitates handling by the user who only needs to press one button of his remote-control unit to implement the method of the invention.

In a preferred embodiment, the step of verification of the capacity for execution of the function of the source device consists of a step of verification of the existence of an association between the function and a second signal among a list of functions each associated with the second command signal proper to the source device.

According to a particular embodiment, the step of verifying the capacity to execute the function of the source device comprises a preliminary step to determine the type, whether analog or digital, of the source device.

The invention is thus applicable whatever the analog or digital device present in the communications network.

Thus, in a preferred embodiment, when the device is of an analog type, the second command signal proper to the source device has been recorded beforehand during a learning phase by the network associating a function with this second command signal. The second command signal is then, for example, of an infrared type and is sent to the source device in the event of positive verification at the step of verifying the capacity to execute the function.

Should the device be of a digital type, the second command signal is of a digital audio-video command type and is sent to the source device in the event of positive verification at the step of verifying the capacity to execute the function.

In a particular embodiment, the step of verifying the function-executing capacity furthermore comprises a step to verify the existence of a memory space available in the source device.

This improves the verification of the capacity of the device in order to prevent errors during the execution of the function.

In a particular embodiment, in the event of positive verification, the step of sending the function-execution command to the source device comprises a step of a determining the type, whether local or remote, of the source device, the source device being of the local type if it is directly connected to the control device and of the remote type if it is connected to the control device through the network.

If the source device is of the remote type, the step of sending the function-execution command to the source device is a step of sending the source device a message, through the network, to obtain said function.

In a preferred embodiment, in the event of negative verification, the step of determining the device of the network capable of executing the function consists in listing the devices of the network for which a second signal has been associated with said function.

These specified devices may also be sorted out according to a predetermined criterion.

This therefore enables a faster selection of the device capable of executing the function.

In a particular embodiment, the predetermined criterion is a criterion of available memory capacity and/or location of the device.

Preferably, the selection of a device of the network to execute the function is done through the user following the reception of a list of devices determined as being capable of executing the function.

Correlatively, the present invention relates to a control device connected to a display device and included in a communications network comprising a plurality of devices. The device comprises:
- means for the reception of a first predetermined command signal for the execution of a function to be applied to the multimedia content displayed on the display device and coming from a source device for which a connection with the display device is set up;
- means for determining the source device in the communications network;
- means for verifying the capacity of execution of the function of the source device;
- means for sending the command for execution of the function to the source device, said sending means being activated in the event of positive verification by the verification means;
- means for determining of at least one device of the network capable of executing the function; and
- means for selecting a device of the network to execute the function, said determining and selection means being activated in the event of negative verification by the verification means.

This device has advantages and characteristics similar to those described here above for the method that it implements.

In particular, in a preferred embodiment, the means of verifying the function-executing capacity of the source device comprise means to verify the existence of an association between the function and a second signal from among a list of functions each associated with a second command signal proper to the source device.

In practice, the means of verifying the function-executing capacity of the source device are activated after the implementation of the means for determining the type, whether analog or digital, of the source device.

Preferably, should the device be of an analog type, the second command signal proper to the source device has been recorded beforehand during a learning phase by the network associating a function with this second command signal.

In a preferred embodiment, the second command signal is of an infrared type and the control device comprises means for sending the second signal to the source device implemented in the event of positive verification by the means for verifying the function-executing capacity.

Similarly, should the device be of a digital type, the second command signal is of a digital audio-video command type and the control device comprises means to send the second signal to the source device in the event of positive verification by the means to verify the function-executing capacity.

Optionally, the means to verify the function-executing capacity comprise means to verify the existence of an available memory space in the source device.

In a preferred embodiment, the means for sending the function-execution command to the source device comprise means for determining the type, whether local or remote, of the source device, the source device being of the local type if it is directly connected to the control device and of the remote type if it is connected to the control device through the network, said determining means being activated in the event of positive verification by the verifying means. Thus, if the source device is of the remote type, the means for sending the function-execution command to the source device include means for the sending of a message, enabling said function to be obtained, to the source device through the network.

Preferably, the means for determining a device of the network capable of executing the function comprise means for setting up a list of devices of the network for which a second signal has been associated with said function, said means for setting up a list being activated in the event of negative verification by the verification means.

Advantageously, the device comprises means for the sorting out, according to a predetermined criterion, of the devices determined as being capable of executing the function, the predetermined function being, for example, a criterion of available memory capacity and/or of location of the device.

In one particular embodiment, the means of selecting a device of the network to execute the function comprise means by which the user makes selection through a graphic user interface representing a list of devices determined as being capable of executing the function.

The invention can be applied especially in the case where the control device is a node of a backbone network comprising a plurality of nodes enabling the interconnection of the terminals, including the source device and the display device.

The invention also relates to a computer program product that can be downloaded from a communications network and/or recorded on a computer-readable support and/or is executable by a processor, said computer program product comprising program code instructions for the execution of the steps of the above-mentioned command management method, when said program is executed on a computer.

Finally, the invention relates to a computer-readable and totally or partially detachable storage means storing a set of instructions executable by said computer to implement the above-mentioned command management method.

### 5. List of figures

Other features and advantages of the invention shall appear from the following description of a preferred embodiment of the invention, given by way of an indicative and non-exhaustive example and from the attended drawings, of which:
- Figure 1 shows a home network, known in the prior art, in which it is possible to implement the navigation method of the invention in at least one graphic user interface;
- Figure 2 is a block diagram of an audio-video interface module, known in the prior art, contained in a multimedia interface device (node) appearing in figure 1;
- Figure 3 is a flowchart of the processing, known in the prior art, implemented by a local node for the learning by the network of an infrared signal used to control an analog device;
- Figure 4 is a flowchart of the processing, known in the prior art, implemented by a distant node receiving a learning message transmitted by the local node;
- Figure 5 describes the structure, known in the prior art, of an IEEE 1394 packet that can be used for the transfer of signals through the home audiovisual network of the invention;
- Figure 6 is a table of correspondence between functions and infrared signals intended for an analog device;
- Figure 7 is a table of correspondence between AV/C functions and commands intended for a digital device;
- Figure 8 illustrates a remote-control unit to implement the sending of first infrared signals according to the invention;
- Figure 9 is a flowchart of the processing, according to the invention, implemented by a node connected to the source device when it receives a command message transmitted by another node having received an infrared signal;
- Figure 10 is a flowchart providing a detailed illustration of the step for verifying the of execution of a function of a device according to the invention;
- Figure 11 is a flowchart illustrating the steps of the command management method according to the invention, implemented by a node having received an infrared signal;
- Figure 12 is a flowchart illustrating the search, according to the invention, for a device in the communications network capable of carrying out the storage function; and
- Figure 13 is a flowchart illustrating the search, according to the invention, for a device in the communications network capable of carrying out the storage function with a view to deferred re-reading.

### 6. Detailed description

For the sake of clarity and simplification, the description here below in the document shall be limited to the preferred embodiment of the invention, in which the remote-control unit implemented by the user sends out infrared IR type signals. It will naturally be easy, for those skilled in the art, to extend this description to any other embodiment of the invention implementing any other type of remote-control unit such as for example a high-frequency remote-control unit.

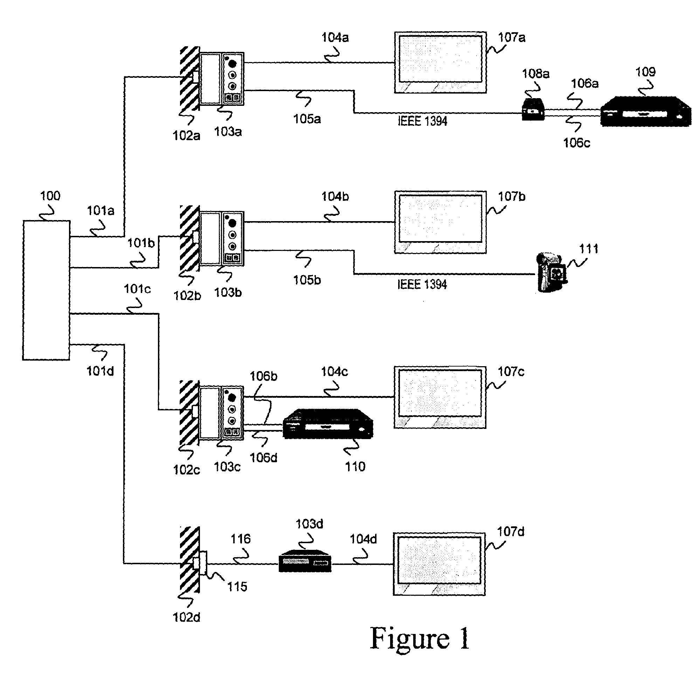

**Figure 1** shows a multimedia communications network in which the method of the invention for navigation in at least one graphic user interface can be implemented. This network is installed for example in a home environment.

The network interconnects devices such as television sets referenced 107a, 107b, 107c and 107d, a set top box referenced 109, a DVD player referenced 110 and a digital video camera referenced 111.

This network has multimedia interface devices referenced 103a, 103b, 103c and 103d (also called nodes hereinafter in the description). The multimedia interface devices referenced 103a, 103b, 103c are for example built into the partition walls 102a, 102b and 102c of the rooms of the dwelling. The multimedia interface device referenced 130d is not built into a partition wall but is connected through a link 116 to the connector referenced 115. These multimedia interface devices are connected to a central switching unit 100 preferably placed beside the electrical power supply panel through links referenced 101a, 101b, 101c, 101d and 116. These links are, for example, of the UTP5 ("Unshielded Twisted Pair, category 5), type as specified in the ANSI/TIA/EIA/568A standard) classically used in Ethernet type networks, and the connector referenced 115 is of the RJ45 type. It must be noted that other types of links, such as optic fiber links or IEEE 1355 compliant cables, could be used.

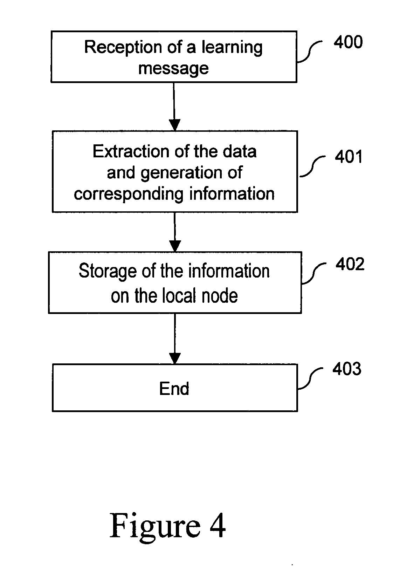

Each of the multimedia interface devices comprises especially connection means of the following three types: Ethernet or IEEE1394 or analog video output (see discussion of figure 4 here below). All the information obtained by the connection means will be distributed to other remote multimedia interface devices through the central switching unit and links connecting this unit to the different multimedia interface devices.

Thus the multimedia interface devices referenced 103a, 103b, 103c and 103d, links references 101a, 101b, 101c, 101d and 116, and the central switching unit 100 together form a backbone network, sometimes also called a "home network backbone".

The television set 107a is connected by means of an analog video link 104a to the multimedia interface device 103a. According to one variant, the link 104a may be compliant with the IEEE 1394 standard and the television set then has an IEEE 1394 board. Similarly the television sets 107b, 107c and 107d are respectively connected to the multimedia interface devices 103b, 103c and 103d by means of analog video links 104b, 104c and 104d.

The set top box (STB) referenced 109 is connected by means of a pair of analog links 106a and 106c (one for the video input and the other for the video output) to an analog/digital converter referenced 108a. This converter is itself connected by means of a IEEE 1394 compliant digital link 105a to the multimedia interface device 103a. This converter converts the analog video information generated by the set top box (STB) 109 to an IEEE 1394 compliant format.

The DVD player referenced 110 is directly connected by a pair of analog links 106b and 106d, (one for the video input and the other for the video output), to the multimedia interface device 103c.

Each source device (a set top box (STB) 109, a DVD player 110 and a digital camcorder 111 in this example) is accessible from any room, through one of the display devices (television sets 107a, 107b, 107c or 107d, in this example).

Conventionally, through a remote-control unit placed at his disposal, the user sends infrared commands to one of the multimedia interface devices 103a, 103b, 103c or 103d (the one before him). These commands are interpreted to set up connections between the source devices and the display devices, or connections between the source devices and the recording devices.

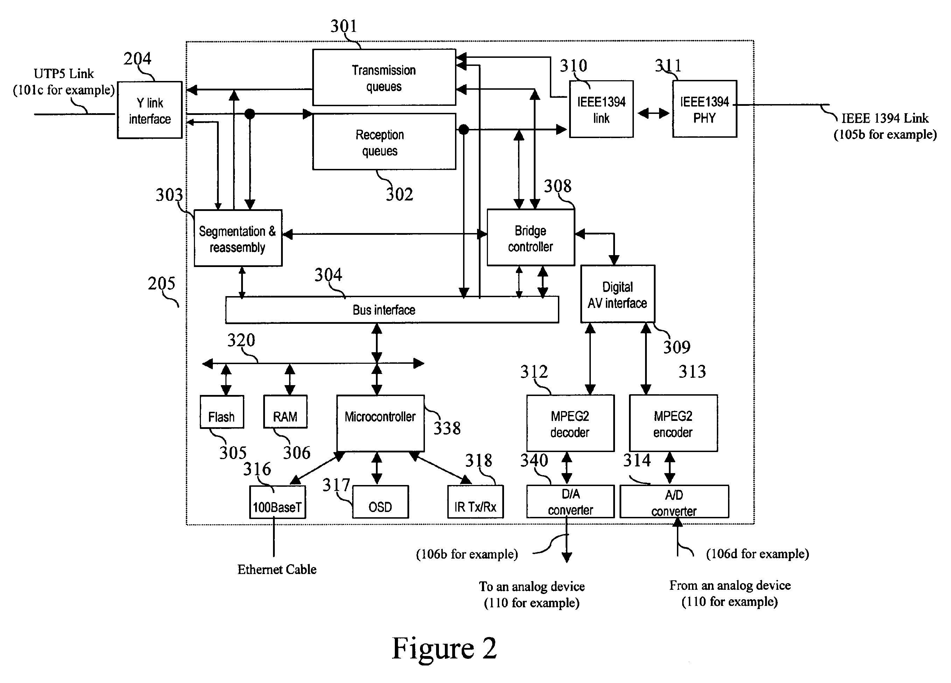

**Figure 2** is a block diagram of an audio/video interface module 205 included in a multimedia interface device (node) referenced 103x, with x = a, b, c or d in figure 1.

In general, an audio/video interface module 205 possesses a plurality of connection means by which signals of different kinds will be processed. The data coming from these connection means will be mixed together so as to form only one data stream compliant with a given protocol that is forwarded by means of the Y-Link interface 204 on the sole medium which, in the example of figure 1, is a UTP5 type link referenced 101x, with x = a, b, c or d.

This audio/video interface 205 will also manage the quality of service constraints associated with these different signals.

The audio/video interface comprises a microcontroller 338 that will transfer data on the bus 320 to RAM (Random Access Memory) type storage means 306, more particularly when the data comes for example from the link 101x.

When the multimedia interface device is powered on, the microcontroller 338 will load the program contained in the flash memory 305 into the RAM 306 and execute the code associated with this program.

The microcontroller 338 will transfer information coming from the different connection means to a transmission queue referenced 301. This transfer complies with the quality of service required for the transfer of this information. Indeed, IEEE 1394 type networks enable the exchange of isochronous or asynchronous type data. The isochronous type data has transmission bit rate imperatives while asynchronous type data can be transmitted without transmission bit rate imperatives. The transfer of data according to a quality of service is described in the European patent application No. 01400316. It shall not be described in fuller detail.

The microcontroller 338 has a 100baseT type Ethernet interface 316 connected to it, enabling the connection of an Ethernet cable.

A character generator or "on-screen display" unit 317 is also connected to the microcontroller 338. This character generator 317 will enable the insertion of information into the video signal transmitted for example on the IEEE 1394 link referenced 105b in figure 1.

An infrared transmission and reception module 318 is also connected to the microcontroller 338. Through this infrared module 318, infrared command signals coming from a remote control unit will be received and then retransmitted by means of the microcontroller 338 to the different devices connected to the network. This transfer of infrared commands is described in the French patent application number FR 0110367. It must be noted that, in one variant, the infrared module is preferably a one-way module.

Through the bus interface 304, the microcontroller 338 will also manage the configuration of the transmission parameters associated with each transmission queue, these parameters being stored in the segmentation and re-assembly module 303.

For the transmission queues associated with an isochronous type data stream (these queues are known as "stream mode buffers"), the segmentation and re-assembly module 303 guarantees the minimum transmission bit rate necessary for the isochronous type data stream on the basis of the transmission parameters.

For the transmission queues associated with an asynchronous type data stream (these queues are known as "message mode buffers"), the segmentation and re-assembly module 303 ensures a maximum bit rate for the asynchronous type data stream on the basis of the transmission parameters.

The transmission parameters associated with each transmission buffer are computed by the microcontroller 338:
- as a function of a reservation of bandwidth in the network for "stream mode buffer" type queues;
- locally as a function of an estimation of the bandwidth available in the network for "message mode buffer" type queues.

The transfer of data according to these two modes of transmission is described in the European patent application number 01400316 and shall not be described more fully.

This data comes:
- either from the devices connected to the IEEE 1394 type links such for example the link 105b,
- or from an analog device (such as for example the videocassette recorder referenced 110 in figure 1) connected to the analog/digital converter 314 (by a link 106d in the above-mentioned example),
- or from a microcomputer type device connected to the Ethernet interface 316.

Should the analog data come, for example, from a videocassette recorder 110 directly connected to the multimedia interface, this data will be converted by the analog/digital converter 314 and then encoded in an MPEG2 or DV type format by the module 313. This encoded data will then be forwarded by means of the digital audio/video interface 309 and the bridge controller 308 to the transmission queue 301. DV is a shortened form of the SD-DVCR ("Standard Definition Digital Video Cassette Recorder ") format. MPEG2 is the acronym for "Motion Picture Expert Group 2". It must be noted that the analog/digital converter 108a shown in figure 1 is herein integrated into the multimedia interface device 103c.

Should the data come from a device connected to an IEEE 1394 link such as, for example, the link 105b, two types of processing will be performed depending on the nature of the data. If this data is asynchronous type data, it will travel through the bus interface 304 and be stored in the memory 306. The microcontroller 338 transfers this data to a transmission queue 301 (of the "message mode buffer" type). If it is isochronous type data, the data will travel directly to a "stream mode buffer" type of transmission queue 301.

The microcontroller 338 will also use the bus interface 304 to manage the distribution of the data received by means of the Y link interface 204 and stored in the reception queue 302.

For isochronous type data, and depending on the destination of this data, the microcontroller 338 will activate the transfer of the data either towards the controller of the IEEE 1394 link referenced 310, if this data is intended for at least one of the terminals connected to the bus 105b for example, or towards the bridge controller 308, if the data is intended for an analog device connected to the link 106b for example.

For asynchronous type data, the microcontroller 338 will activate the transfer of the data to the RAM 306 through the bus interface 304. The Ethernet type asynchronous data will then be sent to the interface 316.

The IEEE 1394 type asynchronous data will then be sent to the interface referenced 311.

If the data is intended for an analog device connected to the link 106b for example, the microcontroller 338 will activate the transfer of this data to the digital audio/video interface 309 by means of the bridge controller 308. This MPEG2 or DV type data will then be decoded by the decoder 312 and fmally forwarded to the digital/analog converter 340, which enables the transfer of the information in analog form, for example, to the analog device (the videocassette recorder 110 in this example) connected to the digital/analog converter 340 by the link 106b.

The segmentation and re-assembly module 303 controls the sending of the data in packet form from the transmission queues to the Y link interface 204. Each packet has a routing header as well as a packet type header (of the "message" or "stream" type depending on the transmission queue). The information on routing and type of packet is configured by the microcontroller 338.

Furthermore, the segmentation and re-assembly module 303 controls the reception of the packets from the Y link interface 204 in order to store the data as a function of the type of packet in the appropriate reception queue, which is either of the "message mode buffer" type or of the "stream mode buffer" type.

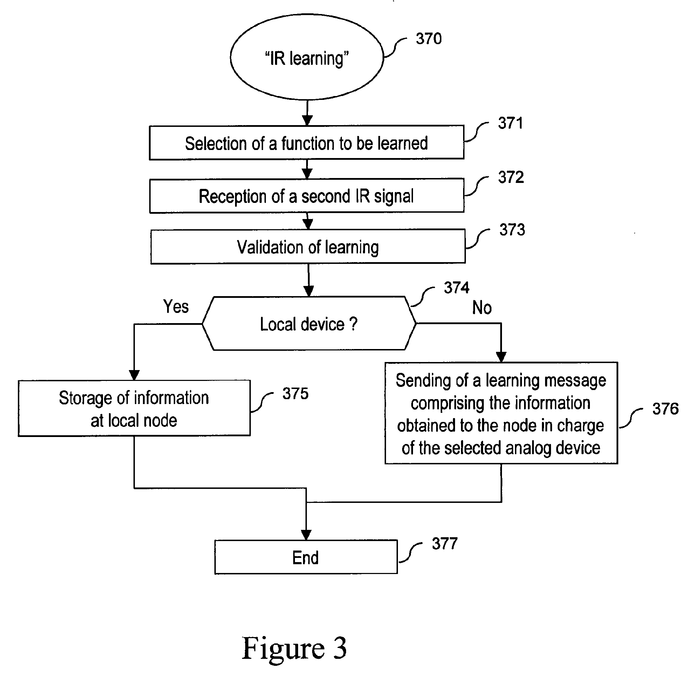

Referring now to **figure 3,** a description is presented of the processing done when an infrared signal has to be learned by the home network..

This learning technique is described in detail in the French patent application published under No FR 2 828 355. The network learns the infrared signals emitted by the remote-control units of the analog devices connected to the network. In other words, the network learns infrared signals enabling the analog devices connected to the network (for example of those referenced 109 and 110 in figure 1) to be controlled. It must be noted that the control of an analog device may, as the case may be, consist in executing functions of the pause or storage type or of any other function applicable to the device.

The infrared signals may be learned from any node referenced 103x, with x = a, b, c or d, in figure 1, in navigating in the graphic user interface of this node (also called a network graphic user interface). However, the infrared signals (also called infrared codes) are stored and managed by the node to which the analog device concerned is connected.

In practice, to teach the network an infrared signal enabling the control of an analog device, the user takes position before a node of the network and uses the graphic user interface of the network (which is displayed for example on a television said connected to this node) as well as a remote-control unit dedicated to this node and enabling the sending of proprietary infrared signals for navigation within the graphic user interface of the network.

In order to avoid any confusion, here below in the description:
- "second infrared signal" shall denote an infrared signal used to control an analog device, and normally sent by the remote-control unit of the analog device; and
- "first infrared signal" denotes an infrared signal used to control a node (and more generally, through this node, the network), and normally sent by the remote-control unit of this node.

In a step 370, the home network (or at least the node before which the user is placed and which he is controlling, hereinafter called a local node) enters a mode for learning second infrared signals. For this purpose, the user sends for example a second infrared signal, called a learning-phase launch signal. At this stage, the local node is already identified along with the analog device to be controlled.

In a step 371, a function to be learned is selected. The graphic user interface of the local node is adapted to guiding the user in the learning phase. A function to be learned can be selected from a set of predetermined functions and/or a set of functions defined by the user. A predefined function possesses a corresponding key on the remote-control unit of the local node while the other functions are accessible only through a control panel included in the graphic user interface of the local node. For any function whatsoever that is capable of being applied by the analog device, a second infrared signal may be learned. Once the function has been selected, the local node waits for a second infrared signal. The user then presses the key of the remote-control unit specific to the source device to send the second infrared signal which is associated with the selected function to be learned.

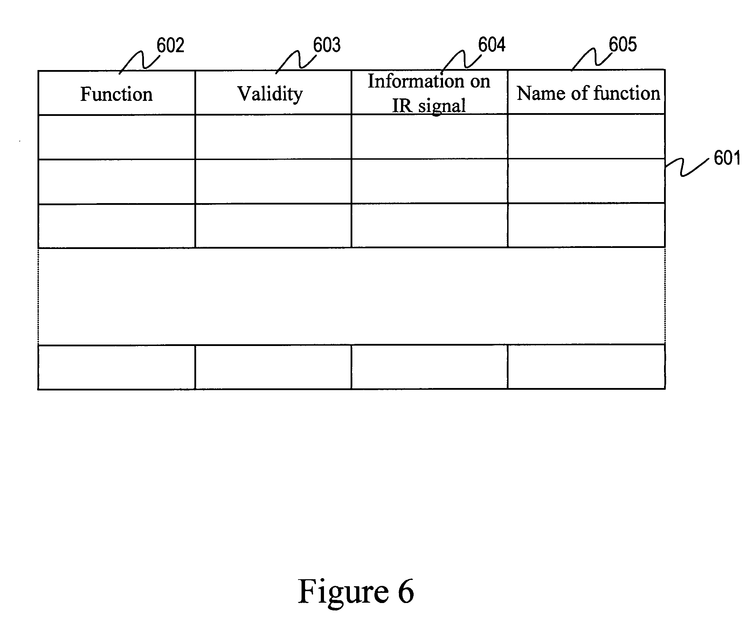

The local node receives this second infrared signal (step 372) and then, after having validated it (step 373), must store it in relation to the function (as illustrated in figure 6 described here below).

If the analog device is physically connected to the local node (with a "yes" response to the question of step 374), the storage is made in a non-volatile memory of the local node (step 375). Otherwise, a protocol is implemented, according to which the local node sends a learning message to the node to which the analog device is connected (called a remote node), so that this remote node stores the above-mentioned information (pertaining to the second infrared signal and the corresponding function) (step 376).

The learning process has been described here above in the case where the storage of the information has been done after the learning of each function. It is clear that another approach may consist of the recording, in a temporary memory, of all the information received during the learning phase for an analog device and then the storage of this information (or its transmission for remote storage) in a single operation after confirmation by the user.

Purely for the sake of simplifying the figures, no acknowledgement or error-management mechanism has been described in the protocol described in the present document. It is quite possible to add such steps while remaining within the context of the present invention.

Referring now to **figure 4,** a description is given of the processing performed by a remote node receiving, in a step 400, a learning message transmitted by the local node (see step 376 of figure 3).

In a step 401, the remote node extracts the information from the learning message, i.e. at least the data representing the analog device, the data representing the function and its second associated second infrared signal. In a step 402 (as in a similar step 375 performed by the local node) preceding the final step 403, this information is stored in a correspondence table as described here below with reference to figure 6 or by means of any other mechanism enabling the association of the function performed by the analog device and of the second infrared signal required to perform this function.

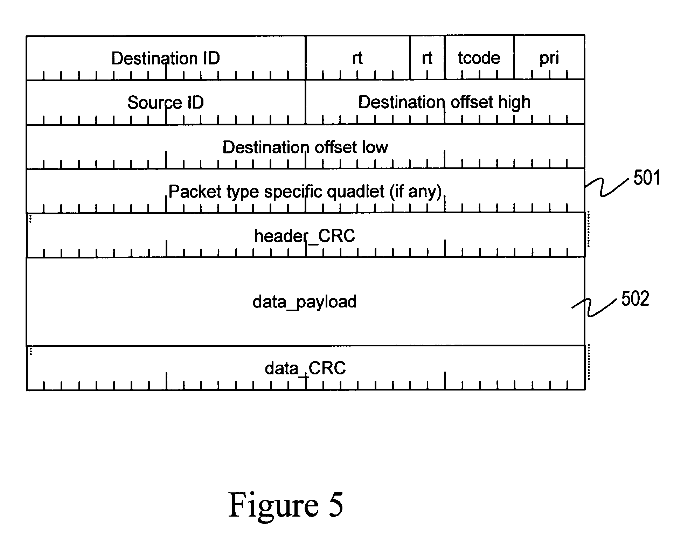

**Figure 5** describes the structure, known in the prior art, of an IEEE 1394 packet that can be used for the transfer of signals through the home audiovisual network of the invention.

An IEEE 1394 packet is an asynchronous packet for which a detailed description can be found in the document "IEEE 1394a-2000 standard". The messages exchanged between nodes (especially the learning messages described here above with reference to figures 3 and 4) are encapsulated in such packets. These packets may also be used for communication between a node and a digital device connected to this node through the use of the IEEE 1394 interface (referenced 311 in figure 2) (as defined in the document "IEC61883 std" and "AV/C Digital Interface Command Set General Specification").

An IEEE 1394 packet referenced 501 in figure 5, comprises especially a *data_payload* field referenced 502 in which the learning messages can be transported.

**Figure 6** is a table of correspondence between functions and second infrared signals for an analog device. Such a table 601 is stored, for each analog device, in a node (for example the one to which this analog device is connected, through an analog video link). Associated with a function identifier 602, a validity field 603 (for example on one bit) indicates whether a second infrared signal corresponding to this function has been learned. This validity field 603 is for example set at "1" after a second infrared signal has been learned for a given function and set at "0" if the field 604 pertaining to the second infrared signal is not significant or no longer significant. The field 604 contains information used to construct the second infrared signal which must be sent to the analog device to fulfill the function indicated in the field 602. The field 605 is optional and represents a name defined by the user for the function. It may be filled by means of a configuration panel or set-up panel forming part of the graphic user interface of the node (network graphic user interface). Other means used to store and retrieve the correspondence between functions and second associated infrared signals, for a particular analog device, may be used instead of this correspondence table 601. The table 601 may contain other data to configure the system in order to manage and control the analog device.

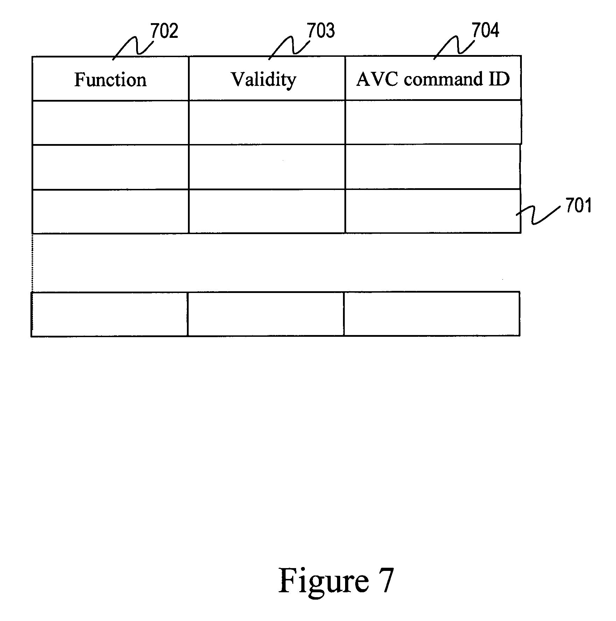

**Figure 7** shows a table of correspondence between functions and second command signals of an AV/C type for a digital device. Such a table 701 is stored, for each digital device, in a node (for example the one to which this digital device is connected through an IEEE 1394 digital link). Associated with a function identifier 702, a validity field 703 (for example on one bit) indicates whether the digital device is capable of executing the function indicated in the field 702. The field 704 contains an identifier of the AV/C command which must be sent to the digital device so that it fulfills the function indicated in the field 702. The AV/C ("AudioVideo/Command") commands are described in the specifications of the "AV/C Digital Interface Command Set General Specification and AV/C Panel Subunit Specification". Other means used to store and retrieve the correspondence between functions and associated AV/C commands for a particular digital device may be used instead of this correspondence table 701. It is possible for example to use a DCM/FCM (Device Control Module/Function Control Module) descriptor as defined in the HAVi described in the reference document "HAVi (Home Audio Video interoperability) specifications (version 1.1 May 15, 2001)". The table 701 may contain other pieces of data to configure the system with a view to managing and controlling the digital device.

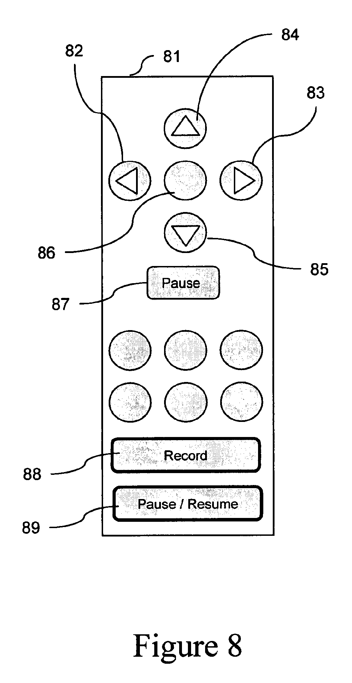

**Figure 8** illustrates an example of a remote-control device such as a remote-control unit that can be used, at the same time, to control the node located in the vicinity, control remote devices by commands preliminarily learned on the network according to the processes described with reference to figures 3 and 4 and, finally, send specific command signals, by means of specific key such as for example "record" referenced 88 and "pause/resume" referenced 89.

Thus, the navigation keys referenced 82, 83, 84, 85 and 86 enable, for example, the selection through the local node, of the source device for which the connection with the display device is requested.

The key "pause" referenced 87 enables, for example, the executing of the pause or "freeze image" function of a stream coming from a source device, the function having been preliminarily learned by the network.

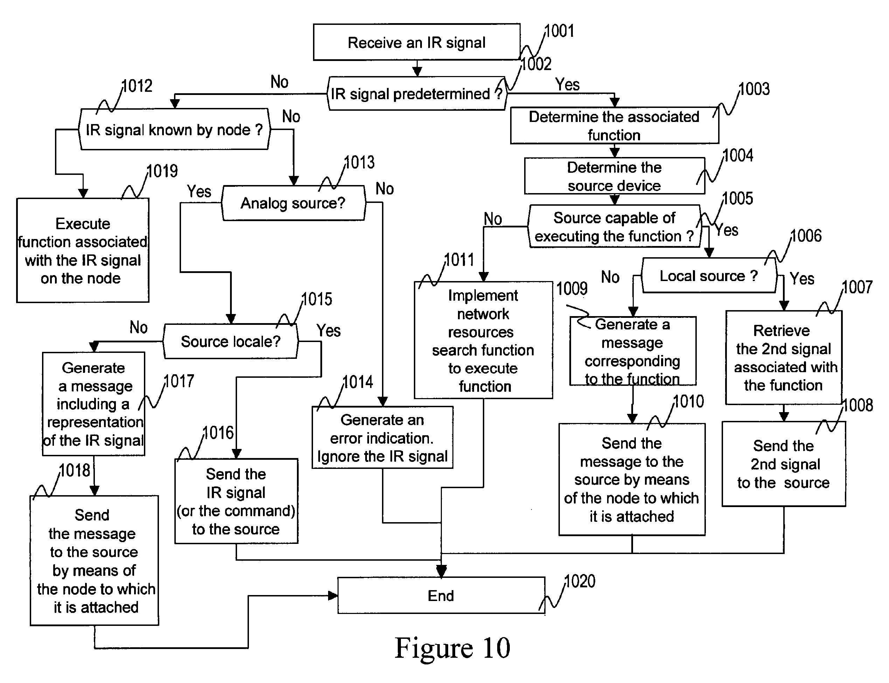

When the user presses one of the specific keys illustrated for example by the keys 88 and 89, the remote-control unit sends a first signal which is recognized by the local node that receives this command, the command management method according to the invention being then implemented by the local node. This method shall be described subsequently with reference to Figure 10.

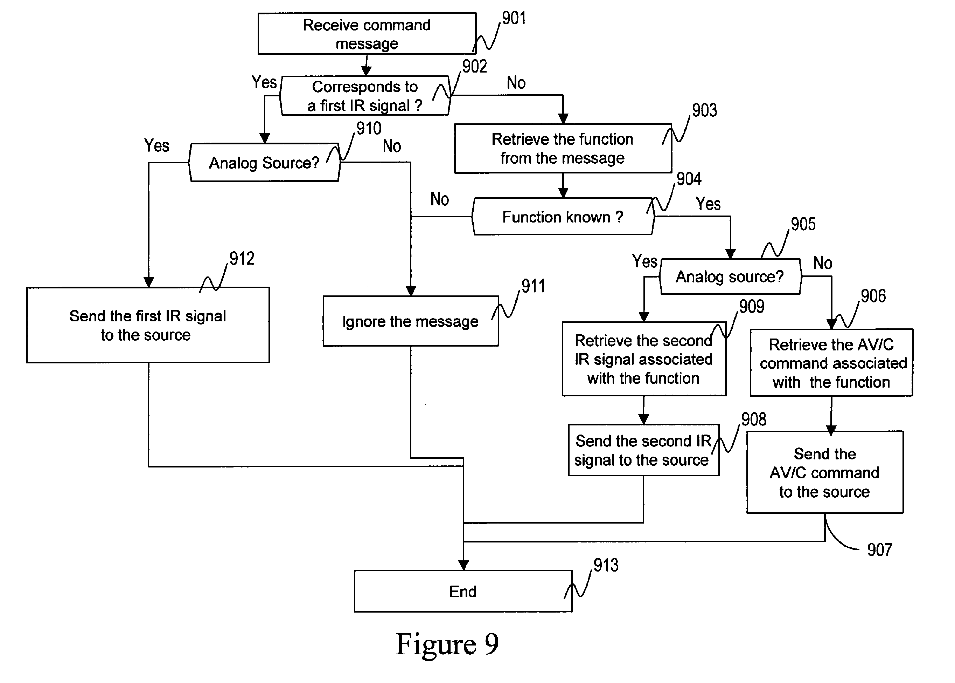

Referring now to **figure 9,** a description is given of the processing performed by a node connected to a source device, when this node receives a command message transmitted by another node having received an infrared signal compliant with the method described with reference to figure 10 described here below.

After receiving a command message (step 901), the node verifies that this command message contains information corresponding to a second infrared signal (step 902).

If the verification is positive at the step 902, then the node checks whether the source device to be controlled, identified in the command message, is of the analog or digital type (step 910). If it is an analog device, the node builds the second infrared signal from information contained in the command message, and then sends this second infrared signal to the source device (step 912). If it is a digital device, the node ignores the command message (step 911) and, as the case may be, sends an error message to the node having generated the command message.

If the verification is negative at the step 902, i.e. if the command message contains a representation of a function (and not information corresponding to a second infrared signal), the node retrieves the function represented in the command message (step 903). The node then ascertains that the retrieved function is a known function (step 904). A known function is a function that has been listed in one of the tables as described with reference to figures 6 and 7. In the event of a negative verification at the step 904, it ignores the command message (step 911) and, as the case may be, sends an error message to the node that had generated the command message. In the event of positive verification at the step 904, it ascertains that the source device to be controlled, identified in the command message, is of an analog or digital type (step 905). If it is an analog device then, from the correspondence table 601 of figure 6, the node retrieves the second infrared signal which was preliminarily learned and associated in this table with the retrieved function, for the source device to be controlled (step 909). Then, it sends this second infrared signal to the source device (step 908). If no information on a second infrared signal is contained in the table 601 (i.e. if the learning phase is not concerned by the function), the node ignores the command message and, as the case may be, sends an error message to the node having generated a command message. If it is a digital device (at the step 905) then, from the correspondence table 701 of figure 7, the node retrieves the information enabling the building of the second AV/C type command signal corresponding to the retrieved function (step 906), then sends this AV/C command to the digital type source device, through the IEEE 1394 interface of the node (step 907).

Referring now to **figure 10,** a description shall be provided of the main steps of the command management method according to the invention.

This node is implemented by a node having received an infrared signal after a user placed in the vicinity of the node has pressed a specific key of a remote-control unit as described with reference to Figure 8.

The example here is the one in which the user is in the process of viewing and/or listening to a multimedia content coming from a source device of the network for which a connection has been made with the display device before which he is placed.

After having received an infrared signal (step 1001), the node ascertains that this infrared signal corresponds to a predetermined infrared signal, i.e. to one of the proprietary infrared signals, proper to the network and sent by the remote-control unit of the node corresponding to pressure on at least one specific key of the remote-control unit (step 1002).

In the event of negative verification at the step 1002 (which means that the infrared signal received by the node does not correspond to pressure on one of the specific keys of the remote-control unit), the node checks (steps 1012) whether this infrared signal corresponds to a known signal of the local node, i.e. a proprietary control signal of the node (corresponding for example to pressure on a navigation key 84).

If the test of the step 1012 is positive, the node retrieves the function associated with the received infrared signal and executes the function. The function, in the case of the infrared signal resulting from the pressure on the key 84, is for example that of setting up a connection with another source device.

If the test of the step 1012 is negative, i.e. if the infrared signal cannot be understood by the node itself, then the node will then transfer the signal to the source device. For this purpose, at the step 1013, the node checks whether the source device to be controlled is of an analog or digital type.

If it is an analog device, the node checks whether the source device to be controlled is connected to it (in this case, the source device is said to be local) or is connected to another node (in this case, the source device is said to be remote) (step 1015). If the source device is an analog and local device, the node sends the second infrared signal to the source device (step 1016).

If the source device is an analog and remote device, the node generates a command message containing a depiction of the infrared signal (step 1017), then sends this command message to the remote node to which the analog source device is connected (step 1018).

If the source device is a digital device (step 1013), the node ignores the received infrared signal and an error message may be returned to the user by an OSD type display to the display device (step 1014).

In the event of positive verification at the step 1002 (which means that the infrared signal received by the node is a first infrared signal sent with the remote-control unit of the node which corresponds to the pressing of specific key of the mode-control unit), the node determines (step 1003) the function that is associated with this first infrared signal. In the example of the remote-control unit of Figure 8, the node determines whether it is a storage function corresponding to the pressing of the "record" key, or a storage function for a deferred re-reading, corresponding to pressure on the key "pause/resume", that has been requested. To this end, the node uses for example a first correspondence table which it stores. This first table (not shown) associates a function with each first infrared signal sent out by the remote-control unit of the node (for example, the first infrared signal sent when the user presses the "record" key is associated with the storage function).

At the step 1004, the node determines the source device for which a connection with the display device has been set up.

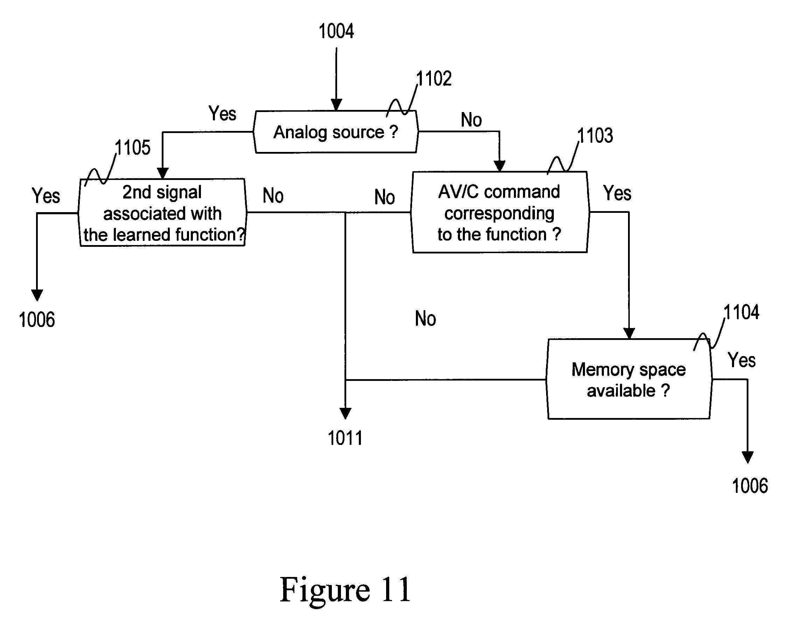

In the step 1005, the node detects whether the source is capable of executing the function thus determined. This step 1005 is described in greater detail with reference to Figure 11.

If the test is positive at the step 1005, i.e. if the source device is capable of performing the requested function, for example the function of storage or deferred storage, the node implements the step 1006.

At the step 1006, the node determines whether the source device is locally present or not, i.e. whether it is connected to it or whether it is connected to another node.

If the source device is local then, at the step 1007, the node retrieves the second signal associated with this function determined previously at the step 1003, the signal being either infrared or an AV/C type audio-video command depending on whether the source device is an analog or digital device.

Should the source device be an analog device, the second signal is retrieved by means of a correspondence table (illustrated in Figure 6), which after learning (see figures 3 and 4), associates a second infrared signal with each function that can be performed by the analog source device.

Should the source device be digital, the second signal is retrieved by means of a correspondence table (illustrated in Figure 7), which associates an AV/C command with each function that can be performed by the digital source device.

The node finally sends this second signal to the source device (step 1008).

If the source device is remote (at the step 1006), the node generates a command message containing a representation of the determined function (step 1009) and finally sends this command message to the remote node to which the remote source device is connected (step 1010).

The remote node then applies the algorithm described with reference to Figure 9 to send the command coming from the message to the source device.

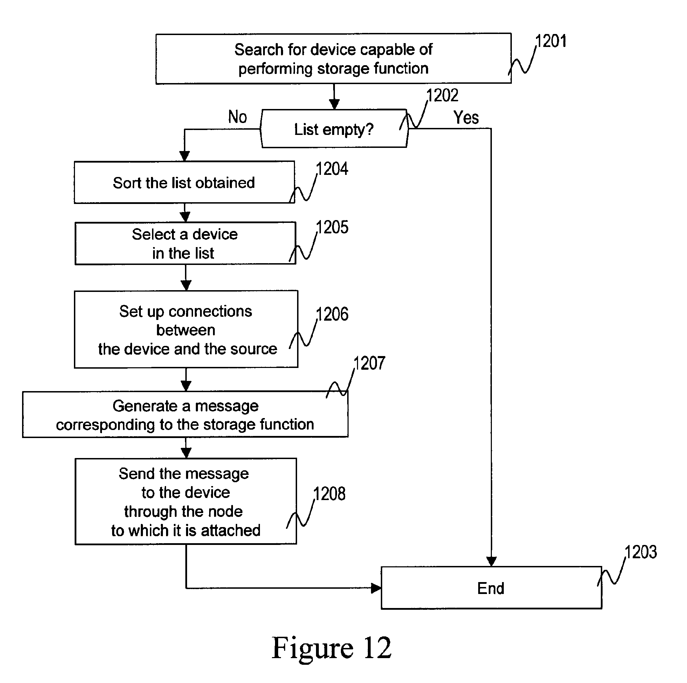

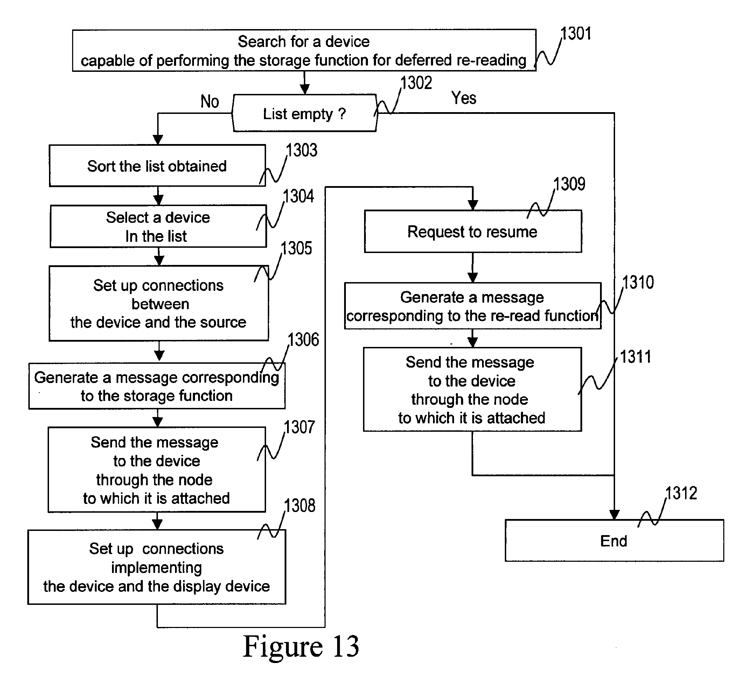

If, at the step 1005, the test is negative, i.e. if the source device does not have the capacity to execute the requested function, the node implements a process of searching for devices capable of performing this function on the network (step 1011), before sending the execution command to the device resulting from the search. This step shall be described in detail further below with reference to figures 12 and 13.

Referring now to **figure 11,** we present the sub-steps that enable the implementation of the step 1005 of figure 10. Thus, at the step 1102, the node checks that the source device is an analog device. If the answer is positive, the node checks, in the correspondence table shown in Figure 6, that the function determined at the step 1003 of Figure 10 has been learned. To this end, the node checks that the field of validity corresponding to the function is at "1" as described in figure 6. If this is the case, it means that the source device is capable of executing the requested function, and a second infrared signal corresponding to the function could then be sent to it. The step 1006 of Figure 10 will then be executed. If the test of the step 1105 is negative, i.e. if a second infrared signal corresponding to the requested function has not been learned, the node passes to the step 1011 of Figure 10.

If, at the step 1102, the node detects that the source or digital, then at the step 1103, the node checks that an AV/C command type of audio-video command is associated with the function for this device in the correspondence table described with reference to Figure 7.

If this is the case, and should the determined function be a storage function then, at the step 1104, the node checks whether a memory space is available in the source device. For this purpose, it verifies, for example, the extent to which the hard disk drive of the source device is filled. If there is no memory space available, or if there is no AV/C command corresponding to the function, the node implements the step 1011 of Figure 10.

If a memory space is available at the step 1104, then the node implements the step 1006 of figure 10.

Referring now to **figure 12,** we present the steps of the search process of the step 1011 of figure 10 for a device capable of executing the function determined at the step 1003 of Figure 10, in the particular case where this function is a storage type function.

At the step 1201, the node will launch a search for a device capable of performing the storage function in the network. For this purpose, as described with reference to Figure 11, it can check in the tables present in the different nodes of the network and corresponding to the different devices present in the network for the existence of a second signal associated with the storage function, the second signals being previously learned infrared signals for analog devices and AV/C commands for digital devices.

A list of different devices in the network is thus obtained. If the list is empty (step 1202), the process gets terminated (step 1203) and an error message can then be generated to warn the user.

If the list is not empty then, at the step 1202, it may undergo sorting at the step 1204 according to a criterion previously indicated by the user which may simply be an order of preference, a criterion of memory capacity or of location of the device in the house.

The node then carries out a step for the selection (step 1205) of a device in the list. This step may be done automatically by the selection, for example, of the first device of the list or else after a proposal to the user on a graphic user interface displayed on his display device which is placed before him.

After the selection of this device, the node at the step 1206 sets up at least the connection enabling the source to be connected to the selected storage device. At the step 1207, the node generates the message corresponding to the storage function and sends this message to the selected device (step 1208) by means of the node to which it is connected. The node, which receives this message, then implements the steps of the flowchart described with reference to Figure 9 to read the message and execute the function.

Referring now to **figure 13,** we present the steps of the search process (step 1011 of figure 10) of a device capable of executing the function determined at the step 1003 of Figure 10, in the particular case where this function is of a storage type from the viewpoint of deferred re-reading.

At the step 1301, the node will launch a search for a device capable of performing the storage function with a view to deferred re-reading in the network. Such a device must have, for example, a hard disk drive capable of accepting at least one write input and at least one read output.

To ascertain that a certain device exists in the network, the node in charge of the search may, as described with reference to Figure 11 make a check in the tables present in the different node of the network and corresponding to the different devices present in the network on whether there are second signals associated with this type of function. The second signals are infrared signals previously learned for analog devices and AV/C commands for digital devices.

Another method would consist in checking for the presence of such a function in the configuration tables of the device (of the configuration memory type commonly called "config ROM"). Such tables may also be centralized in the network.

A list of different devices in the network is thus obtained. If the list is empty (step 1302), the process gets terminated (step 1312) and an error message can then be generated to warn the user.

If the list is not empty then, at the step 1302, it may undergo sorting at the step 1303 according to a criterion previously indicated by the user which may be simply an order of preference, a criterion of memory capacity or of the location of the device in the house.

The node then performs a step for the selection of a device in the list. This step may be done automatically by the selection, for example, of the first device of the list or else after a proposal to the user on a graphic user interface displayed on his display device which is placed before him.

After the selection of this device, the node at the step 1305 sets up at least the connection enabling the source to be connected to the selected storage device.

At the step 1306, the node generates a message corresponding to the storage function, which corresponds to the first action of pressing the "pause/resume" key of the remote-control unit and sends this message to the selected device (step 1307) by means of the node to which it is connected.

In the step 1308, the node sets up a connection between the selected storage device and the display device in which the user views his audio-video stream.

When the node receives a signal coming from the remote-control unit and activates the "pause/resume" key for a second time (step 1309) by pressure, the node, at the step 1310, generates a message corresponding to the function of re-reading the audio-video stream in the course of recording and sends this message to the selected device (step 1308) by means of the node to which it is connected. The node which receives this message then implements the steps of the flowchart described with reference to Figure 9 to read the message and execute the function.

## Claims

1. A method for the management of commands coming from a remote-control device in a communications network comprising a plurality of devices, the method comprising the following steps implemented in a control device connected to a display device:
- receiving a first predetermined command signal for the execution of a function to be applied to the multimedia content displayed on the display device and coming from a source device for which a connection with the display device is set up;
- determining the source device in the communications network;
- verifying the function-executing capacity of the source device;
in the event of positive verification:
- sending the command for execution of the function to the source device;
in the event of negative verification:
- determining at least one device of the network capable of executing the function; and
- selecting a device of the network to execute the function.

2. A method according to claim 1, wherein the function to be applied is a storage function.

3. A method according to claim 1, wherein the function to be applied is a storage function with a view to deferred re-reading.

4. A method according to one of the claims 1 to 3, wherein the first predetermined command signal is activated by the pressing of at least one specific key of the remote-control device.

5. A method according to one of the claims 1 to 4, wherein the step of verification of the function-executing capacity of the source device consists of a step of verification of the existence of an association between the function and a second signal among a list of functions each associated with the second command signal proper to the source device.

6. A method according to one of the claims 1 to 5, wherein the step of verifying the function-executing capacity of the source device comprises a preliminary step to determine the type, whether analog or digital, of the source device.

7. A method according to claim 6 wherein, should the device be of an analog type, the second command signal proper to the source device has been recorded beforehand during a learning phase by the network associating a function with this second command signal.

8. A method according to claim 7, wherein the second command signal is of an infrared type and is sent to the source device in the event of positive verification at the step of verifying the capacity to execute the function.

9. A method according to claim 6 wherein, should the device be of a digital type, the second command signal is of a digital audio-video command type and is sent to the source device in the event of positive verification at the step of verifying the capacity to execute the function

10. A method according to claim 9 wherein the step of verifying the function-executing capacity furthermore comprises a step to verify the existence of a memory space available in the source device.

11. A method according to any of the claims 1 to 10 wherein, in the event of positive verification, the step of sending the function-execution command to the source device comprises a step of a determining the type, whether local or remote, of the source device, the source device being of the local type if it is directly connected to the control device and of the remote type if it is connected to the control device through the network and wherein, should the source device be of the remote type, the step of sending the function-execution command to the source device is a step of sending the source device a message, through the network, to obtain said function.

12. A method according to one of the claims 1 to 11 wherein, in the event of negative verification, the step of determining the device of the network capable of executing the function consists in listing the devices of the network for which a second signal has been associated with said function.

13. A method according to claim 12, wherein the devices determined as being capable of executing the function are sorted out according to a predetermined criterion.

14. A method according to claim 13, wherein the predetermined criterion is a criterion of available memory capacity and/or location of the device.

15. A method according to one of the claims 1 to 14, wherein the selection of a device of the network to execute the function is done through the user following the reception of a list of devices determined as being capable of executing the function.

16. A control device connected to a display device and included in a communications network comprising a plurality of devices, the device comprising:
- means for receiving a first predetermined command signal for the execution of a function to be applied to the multimedia content displayed on the display device and coming from a source device for which a connection with the display device is set up;
- means for determining the source device in the communications network;
- means for verifying the function-executing capacity of the source device;
- means for sending the command for execution of the function to the source device, said sending means being activated in the event of positive verification by the verification means;
- means for determining at least one device of the network capable of executing the function; and
- means for selecting a device of the network to execute the function, said determining and selection means being activated in the event of negative verification by the verification means.

17. A computer program product that can be downloaded from a communications network and/or recorded on a computer-readable support and/or is executable by a processor, said computer program product comprising program code instructions for the execution of the steps of the method according to any of the claims 1 to 15, when said program is executed on a computer.

18. A computer-readable and totally or partially detachable storage means storing a set of instructions executable by said computer to implement the method according to any of the claims 1 to 15.
